# EUROPÄISCHE PATENTANMELDUNG

(11) **EP 1 394 423 A1**
(43) Veröffentlichungstag der Anmeldung: **03.03.2004**
(21) Anmeldenummer: 03018004.6
(22) Anmeldetag: 07.08.2003
(51) Int. Cl.: F16C 11/06, F16C 11/04, B29C 45/00, H01H 23/14, G05G 9/047

(54) **Kunststoffgelenk und Verfahren zu seiner Herstellung**

(30) Priorität: 30.08.2002 DE 10239966
(71) Anmelder: Integrated Electronic Systems !SYS Consulting GmbH, 75248 Ölbronn-Dürrn (DE)
(72) Erfinder: Bredow, Wolfgang, 75223 Niefern-Öschelbronn (DE); Burchard, Thomas, 75177 Pforzheim (DE); Haug, Thomas, 75248 Ölbronn (DE)
(74) Vertreter: Frank, Gerhard, Dipl.-Phys.

(57) **Zusammenfassung**

Ein Kunststoffgelenk für einen um mindestens eine Schwenkachse beweglichen Schaltstift weist ein inneres, erstes Gelenkelement und ein äußeres, zweites Gelenkelement zur Montage in einem Gerät auf. Das erste Gelenkelement besteht aus einem ersten Kunststoffmaterial mit axial gegenüberliegenden Endabschnitten, das zweite Gelenkelement (20) aus einem zweiten Kunststoffmaterial mit in der Schwenkachse (X-X) liegenden Bohrungen, in denen die Endabschnitte (32) zur Bildung der Schwenkachse (X-X) gelagert sind. Die Gelenkelenente sind zur Abdichtung mit einem Kunstoff- Dichtelement (40) überspannt. Die Gelenkelemente sind einzeln oder im Verbund mittels Spritzguss herstellbar.

## Beschreibung

Die Erfindung betrifft ein Kunststoffgelenk und ein Verfahren zu seiner Herstellung.

Aufgabe der Erfindung ist es, ein Kunststoffgelenk mit einem Minimum an Montageschritten herzustellen, das insbesondere als Schalter Verwendung finden kann.

Erfindungsgemäß wird diese Aufgabe gemäß dem Patentanspruch 1 gelöst.

Der Grundgedanke der Erfindung besteht darin, durch geeignete Auswahl der inneren und äußeren Gelenkelemente, insbesondere Wahl des Kunststoffmaterials und dessen thermischer Eigenschaften, eine schrittweise Herstellung des gesamten Gelenks aus Kunststoffmaterialien zu ermöglichen, wobei zumindest ein Teil der Gelenkelemente mittels Spritzgusstechnik erzeugt werden kann.

Die Kunststoffmaterialien der Gelenkelemente sind hierbei vorzugsweise so gewählt, dass die Herstellung des einen Gelenkelements auch durch einen Spritzgießvorgang durch die Gelenkbohrungen des anderen Gelenkelements hindurch erfolgen kann, ohne dass die Kunststoffe im Gelenkbereich eine Verbindung eingehen, so dass eine Drehung erfolgen kann.

Eine einfache Erweiterung der erfindungsgemässen Lösung erlaubt auch die Herstellung eines Kardangelenks.

Die Herstellung des Gelenks aus Kunststoff gestattet gemäss einer besonders bevorzugten Weiterbildung des Erfindungsgedankens insbesondere auch die Aufbringung eines Kunststoff-Dichtelements bspw. durch Verschweissen oder Aufkleben auf bzw. über die Gelenkelemente zur sicheren und dauerhaften Abdeckung und Abdichtung des Gelenkbereichs zumindest auf dessen äusserer Oberseite.

### Kurze Beschreibung der Zeichnungen

Bevorzugte Ausführungsbeispiele werden nun anhand der Zeichnungen näher erläutert, es zeigen:
- Figur 1:: Eine perspektivische Gesamtansicht des Gelenks an einem Schaltstift,
- Figur 2:: Zwei Längsschnitte durch das Gelenk nach Figur 1,
- Figur 3-6:: Darstellungen der einzelnen Herstellungsstufen der Gelenkkomponenten,
- Figur 7:: Einen Querschnitt eines Kardangelenks, und
- Figur 8:: Einen Schnitt durch eine Variante des Kardangelenks.

### Beschreibung der Ausführungsbeispiele

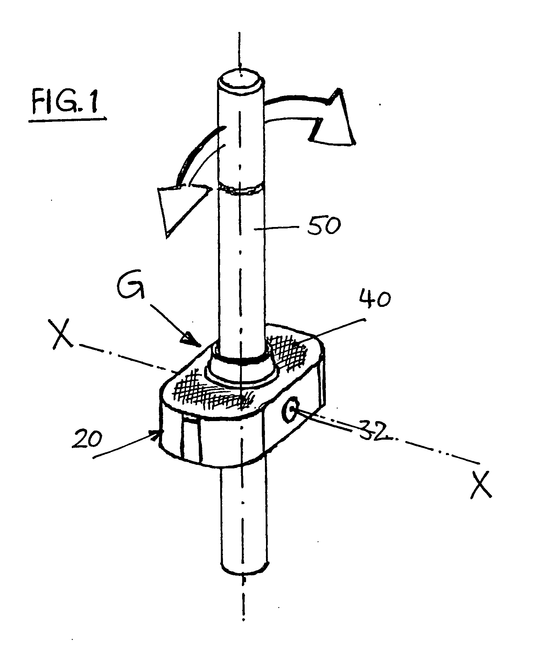

Das in Figur 1 dargestellte Gelenk G umschließt einen Schaltstift 50, der beispielsweise Teil eines Steuerknüppels (Joystick) sein kann, wie er in Schalteinrichtungen oder Fernsteuereinrichtungen Verwendung findet, und dessen oberes Ende beispielsweise mit einem Schaltgriff und dessen unteres Ende mit Kontaktelementen zum Zusammenwirken mit Gegenkontakten in einem Gehäuse ausgestattet ist, letztere Bauteile sind im Rahmen der Erfindung ohne Interesse.

Zur Betätigung des Schalters wird der Schaltstift 50 um die Schwenkachse X-X in Richtung des Doppelpfeils bewegt, wobei ein Dichtelement 40 in Form einer Folie in den schraffiert dargestellten Bereichen verformt wird und ggf. eine Rückstellkraft erzeugt.

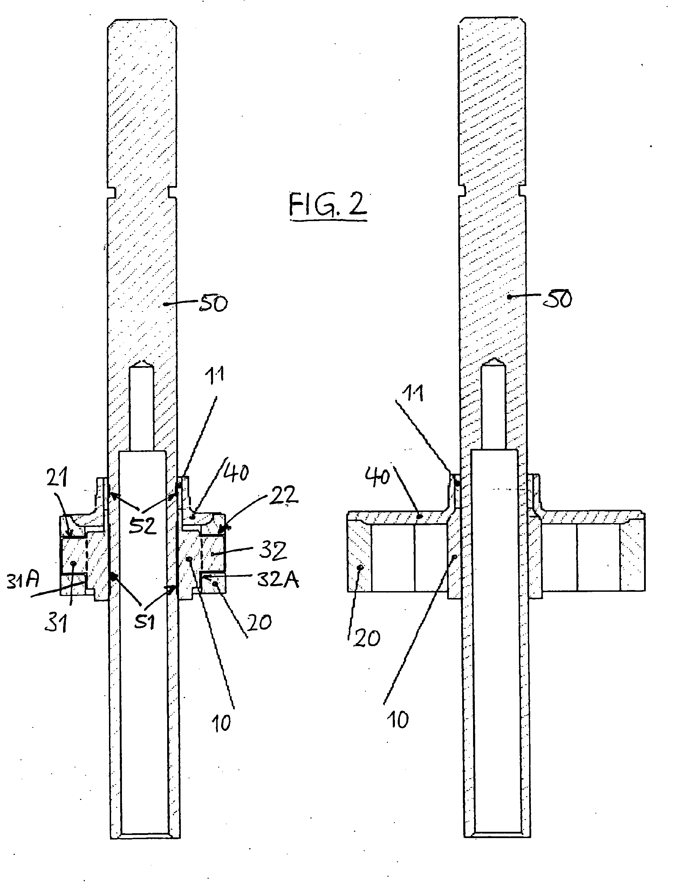

Figur 2 zeigt den Detailaufbau des Gelenks:

Um den Schaltstift 50 liegt ein erstes, inneres Gelenkelement 10 aus einem ersten Kunststoffmaterial, beispielsweise Polyoxymethylen (POM). Der Schaltstift 50 weist zur Ortsfixierung des ersten Gelenkelements 10 zumindest auf einem Teil seines Umfangs Profilierungen, insbesondere Längsrillen 51, auf. Das erste Gelenkelement 10 weist zylindrische Endabschnitte 31,32 auf, die diametral gegenüberliegen und die Schwenkachse X-X bilden. Das erste Gelenkelement 10 ist femer so geformt, dass Ringschultern 31A,32A gebildet werden, an denen ein zweites, äußeres Gelenkelement 20 anliegt, das aus einem zweiten Kunststoffmaterial, beispielsweise Polypropylen (PP), besteht.

Es handelt sich beim zweiten Gelenkelement 20 um einen geschlossenen, längs gestreckten Ring, in dessen Schmalseiten Bohrungen 21,22 ausgespart werden, die eine Aufnahme für die Endabschnitte 31,32 bilden. Der Abstand der beiden Längsseiten des zweiten Gelenkelements 20 ist um einige Millimeter größer als der Außendurchmesser des ersten Gelenkelements 10, der Abstand der beiden Schmalseiten ist größer gewählt, um beim Aufsetzen des äußeren Gelenkelements 20 auf die Endabschnitte 31,32 des ersten Gelenkelements 10 einen gewissen Verformungsweg zu haben.

Unmittelbar oberhalb des ersten Gelenkelements 10 ist ein Ring 11 ebenfalls aus dem zweiten Kunststoffmaterial, beispielsweise Polypropylen (PP), also dem gleichen Material wie das zweite Gelenkelement 20, aufgebracht, auch hier sind Längsrillen 52 im Schaltstift 50 vorgesehen.

Über die Außenfläche des Rings 11 konisch abgeschrägte Stirnflächen des ersten Gelenkelements 10 und die Stirnseite des zweiten Gelenkelements 20 erstreckt sich das Dichtelement, beispielsweise aus thermoplastischem Elastomer (TPE).

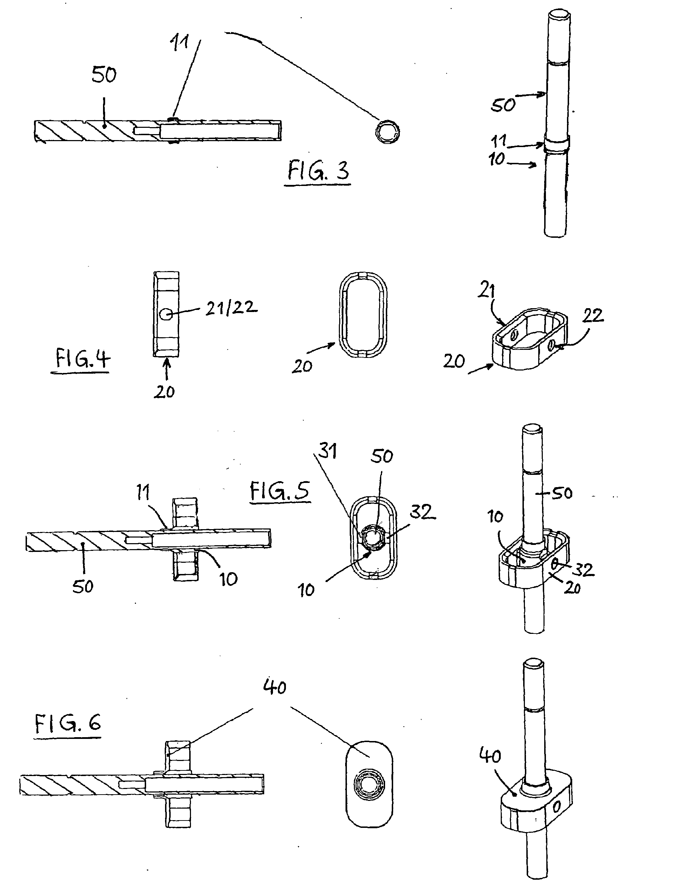

Eine bevorzugte Herstellung dieses Gelenks wird anhand der Figuren 3 bis 6 erläutert:

Um den Schaltstift 50 wird aus dem zweiten Kunststoffmaterial der Ring 11 auf den metallischen Schaltstift 50 aufgespritzt oder aufgeklebt.

Danach wird das zweite Gelenkelement 20 bspw. als Spritzgussformteil hergestellt, das die Verbindung beispielsweise mit einem Gehäuse oder einer Grundplatte herstellt, auf dem/der der Schalter mit dem Gelenk G montiert werden soll.

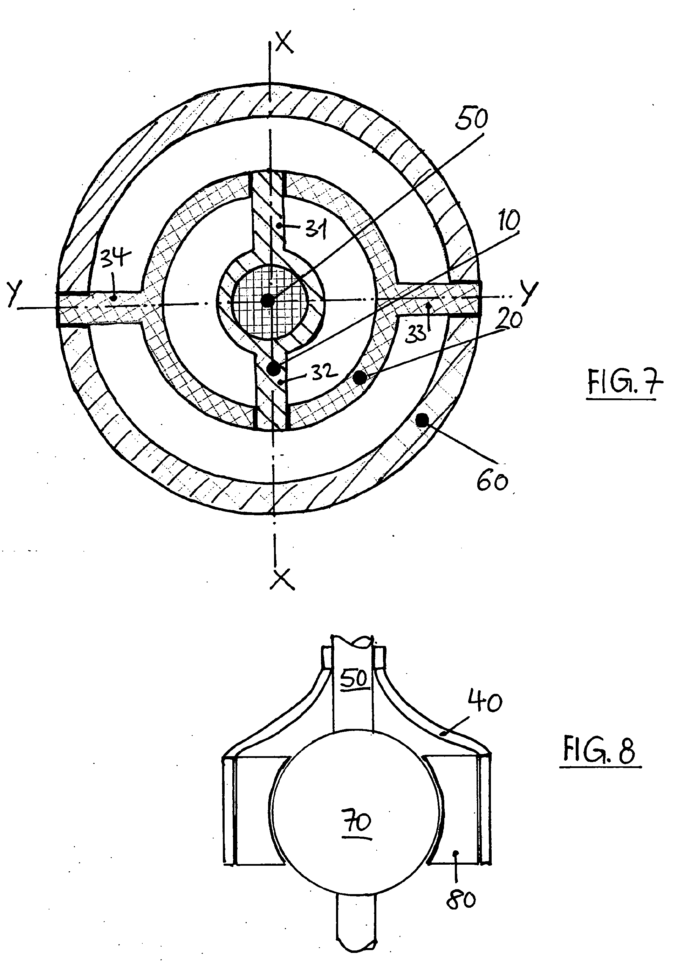

Im nächsten Verarbeitungsschritt wird das erste Gelenkelement 10 mit den Endabschnitten 31,32 als Gelenkachse erzeugt, indem zunächst das zweite Gelenkelement 20 auf gleiche Höhe mit den Längsrillen 51 auf dem Schaltstift 50 derart positioniert wird, so dass die Bohrungen 21,22 gegenüber den Längsrillen 51 zu liegen kommen. In dieser Position werden die beiden Teile in einen Spritzgussautomaten eingelegt, und aus dem ersten Kunststoffmaterial wird das erste Gelenkelement 10 mit den zylindrischen Formteilen 31,32 durch die Bohrungen 21,22 hindurch zum Schaltstift 50 gespritzt, wobei sie sich bei der herrschenden Verarbeitungstemperatur nicht mit dem zweiten Kunststoffmaterial der Innenwandungen der Bohrungen 21,22 verbinden, so dass die in Figur 4 rechts dargestellte Anordnung ein Gelenk darstellt, bei dem das zweite Gelenkelement 20 gegenüber dem ersten Gelenkelement 10 verschwenkbar ist.

In einem letzten Verarbeitungsschritt wird dann das Dichtelement in Form einer Folie 40 auf eine gemeinsame Stirnseite der Gelenkelemente 10,20 aufgezogen und mit dieser verschweißt, so dass durch Dehnung bzw. Stauchung der Folie 40 beim Schwenken des Schaltstiftes 50 um die von den eingespritzten Endabschnitten 31,32 gebildete Schwenkachse X-X die Dichtigkeit des Gelenks erhalten bleibt und bei geeigneter Dimensionierung der Folie 40 ggf. auch ein Rückstelleffekt erreicht werden kann.

Die geschilderte Herstellung kann auch durch eine separate Herstellung des ersten Gelenks 10 ersetzt werden, indem dieses beispielsweise getrennt als Spritzgussformteil hergestellt wird und auf dem Schaltstift 50 auf den hierfür vorgesehenen Längsrillen verklebt oder auch beispielsweise durch Ultraschall verschweißt wird, so dass die Endabschnitte 31,32 durch Aufweitung des zweiten Gelenkelements 20 lediglich durch die Bohrungen 21,22 gesteckt zu werden brauchen.

Mit dieser Technik ist auch die Herstellung eines Kardangelenks möglich, wenn ein drittes Gelenkelement auf entsprechend am zweiten Gelenkelement angeformte Abschnitte als Gelenkteile aufgesteckt wird.

### Figur 7 zeigt eine solche Weiterbildung:

Am zweiten Gelenkelement 20 sind Endabschnitte 33,34 angeformt, die in Bohrungen eines dritten Gelenkelements 60 (vorzugsweise aus Polypropylen (PP)) eingreifen und eine zweite Schwenkachse Y-Y bilden, die senkrecht zur ersten Schwenkachse X-X liegt.

Figur 8 zeigt eine Variante dieses Kardangelenks, bei der anstelle der Gelenkelemente mit ihren angeformten Endabschnitten ein inneres, kugelförmiges Gelenkelement 70 den Schaltstift 50 umschliesst, das in einem Halteelement 80 gehalten und schwenkbar gelagert ist. Das Dichtelement 40 überspannt das gesamte Gelenk.

## Patentansprüche

1. Kunststoffgelenk zur um mindestens eine Schwenkachse beweglichen Halterung eines Schaltstiftes, mit einem inneren, ersten Gelenkelement und einem äußeren, zweiten Gelenkelement zur Montage in einem Gerät,
**dadurch gekennzeichnet, dass** das erste Gelenkelement (10) aus einem ersten Kunststoffmaterial mit axial gegenüberliegenden Endabschnitten (31,32) besteht, und dass das zweite Gelenkelement (20) aus einem zweiten Kunststoffmaterial mit in der Schwenkachse (X-X) liegenden Bohrungen (21,22) besteht, in denen die Endabschnitte (31,32) zur Bildung der Schwenkachse (X-X) gelagert sind.

2. Kunststoffgelenk nach Anspruch 1, **dadurch gekennzeichnet, dass** der Schaltstift (50) auf einem Teil seines Umfangs Profilierungen, insbesondere Längsrillen (51), aufweist, in denen das erste Gelenkelement (10) festgesetzt ist.

3. Kunststoffgelenk nach Anspruch 1, **dadurch gekennzeichnet, dass** unmittelbar. an das erste Gelenkelement (10) anschließend ein Ring (11) aus dem zweiten Kunststoffmaterial den Schaltstift (50) umschließt.

4. Kunststoffgelenk nach Anspruch 1, **dadurch gekennzeichnet, dass** das erste Kunststoffmaterial Polyoxymethylen (POM) und das zweite Kunststoffmaterial Polypropylen (PP) ist.

5. Kunststoffgelenk nach Anspruch 1, **gekennzeichnet durch** ein das erste Gelenkelement (10) und den Ring (11) mit dem zweiten Gelenkelenent (20) verbindendes Dichtelement.

6. Kunststoffgelenk nach Anspruch 6, **dadurch gekennzeichnet, dass** das Dichtelement aus einer Folie (40) aus thermoplastischem Polymer (TPE) besteht, die eine gemeinsame Stirnseite überspannt und dort aufgesiegelt ist.

7. Kunststoffgelenk nach Anspruch 5, **dadurch gekennzeichnet, dass** das Dichtelement eine Rückstellfunktion hat.

8. Verfahren zur Herstellung eines Kunststoffgelenks nach Anspruch 1, gekenn zeichnet durch folgende Verfahrensschritte:
a) Umspritzen des Schaltstiftes (50) mit dem Ring (11),
b) Spritzen des zweiten Gelenkelements (20) mit gegenüberliegenden Bohrungen (21,22),
c) Einlegen des Schaltstiftes (50) und der Außenhülse (20) einander gegenüberliegend in eine Spritzgießform und Einspritzen des ersten Gelenkelements (10) mit den Endabschnitten (31,32) durch die Bohrungen (21,22) des zweiten Gelenkelements (20) hindurch bis zum Schaltstift (50) zur Bildung der Schwenkachse (X-X).

9. Kunststoffgelenk nach Anspruch 1, **dadurch gekennzeichnet, dass** ein drittes Gelenkelement (60) mit zur ersten Schwenkachse (X-X) senkrecht liegenden, zweiten Schwenkachse (Y-Y) vorgesehen ist, das zur Bildung eines Kardangelenks in Endabschnitte (33,34) des zweiten Gelenkelements (20) eingreift.

10. Kunststoffgelenk nach Anspruch 9, **dadurch gekennzeichnet, dass** zwei der Gelenkelemente zu einem kugelförmigen Gelenkelement (70) zusammengefasst sind, das den Schaltstift (50) umschliesst, und in einem Halteelement (80) in zwei Ebenen schwenkbar gehalten ist.

11. Kunststoffgelenk nach Anspruch 10, **dadurch gekennzeichnet, dass** das Dichtelement (40) sich vom Schaltstift (50) über das Halteelement (80) erstreckt.

12. Verwendung eines Kunststoffgelenks nach einem der vorhergehenden Ansprüche als Gelenk für einen stufenlosen Schalter in Geräten zur Steuerung von Arbeitsmaschinen.
